# EUROPEAN PATENT SPECIFICATION

(11) **EP 3 512 143 B1**
(45) Date of publication and mention of the grant of the patent: **30.06.2021**
(21) Application number: 17854609.9
(22) Date of filing: 21.08.2017
(51) Int. Cl.: H04L 5/00

(54) **METHOD AND DEVICE FOR TRANSMITTING REFERENCE SIGNAL**
VERFAHREN UND VORRICHTUNG ZUR ÜBERTRAGUNG EINES REFERENZSIGNALS
PROCÉDÉ ET DISPOSITIF D'ÉMISSION D'UN SIGNAL DE RÉFÉRENCE

(30) Priority: 30.09.2016 CN 201610877736
(43) Date of publication of application: 17.07.2019
(73) Proprietor: Huawei Technologies Co., Ltd., Longgang District Shenzhen, Guangdong 518129 (CN)
(72) Inventor: WU, Lu, Shenzhen Guangdong 518129 (CN); LIU, Yong, Shenzhen Guangdong 518129 (CN); SHI, Hongzhe, Shenzhen Guangdong 518129 (CN)
(74) Representative: Körber, Martin Hans
(86) International application number: PCT/CN2017/098283
(87) International publication number: WO 2018/059157

(56) References cited:
- WO-A1-2012/092797
- CN-A- 101 340 228
- CN-A- 101 340 228
- CN-A- 101 355 412
- CN-A- 103 685 118
- CN-A- 104 010 363
- US-A1- 2012 033 643
- ZTE CORPORATION ET AL: "Discussion on Design of Reference Signals for NR MIMO", 3GPP DRAFT; R1-165037 DISCUSSION ON DESIGN OF REFERENCE SIGNALS FOR NR MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. RAN WG1, no. Nanjing, China; 20160523 - 20160527 14 May 2016 (2016-05-14), XP051096288, Retrieved from the Internet: URL:http://www.3gpp.org/ftp/tsg_ran/WG1_RL 1/TSGR1_85/Docs/ [retrieved on 2016-05-14]

## Description

### TECHNICAL FIELD

This application relates to the field of communications technologies, and in particular, to a reference signal transmission method, a device, a system, and a storage medium.

### BACKGROUND

A communications system such as Long Term Evolution (English: Long Term Evolution; LTE for short) and Long Term Evolution Advanced (English: Long term evolution-advanced; LTE-A for short) usually uses a multiple-input multiple-output (English: Multiple Input Multiple Output; MIMO for short) technology to improve system performance. In the MIMO technology, a plurality of antennas are disposed on a transmit-end device and a receive-end device. In a process in which the transmit-end device communicates with the receive-end device, a reference signal (English: Reference Signal; RS for short) needs to be used to perform channel estimation. Therefore, the reference signal needs to be transmitted between the transmit-end device and the receive-end device. The reference signal is also referred to as a pilot signal or a reference signal, and may include but is not limited to a cell-specific reference signal (English: Cell-specific Reference Signals; CRS for short), a channel state information-reference signal (English: Channel State Information Reference Signal; CRS-RS for short), and a sounding reference signal (English: Sounding Reference Signal; SRS for short). The channel estimation refers to a process of reconstructing a received signal to compensate for channel fading and noise. In the channel estimation, an RS known by the transmit-end device and the receive-end device in advance is used to track a change of a channel in time domain and frequency domain.

In the prior art, a transmit-end device may map reference signals of all antenna ports to a last symbol in a subframe, and send the reference signals of all the antenna ports to a receive-end device by using the subframe. The last symbol in the subframe may be multiplexed through frequency division multiplexing (English: Frequency Division Multiplexing; FDM for short) or code division multiplexing (English: Code Division Multiplexing; CDM for short) between the reference signals of the antenna ports. The transmit-end device may periodically send a reference signal to the receive-end device, or may non-periodically send a reference signal to the receive-end device based on triggering by the receive-end device.

In a process of implementing this application, the inventor finds that the prior art has at least the following problem: In the prior art, mapping the reference signals of all the antenna ports to a last symbol in a subframe leads to inflexible reference signal transmission. US 2012/33643 A1 shows a method of multiplexing reference signals for multiple antennas within a single component carrier.

### SUMMARY

To resolve a problem of inflexible reference signal transmission, embodiments of this application provide a reference signal transmission method according to independent claim 1, a device according to independent claim 10. Additional features of the invention are provided in the dependent claims. In the following, parts of the description and drawings referring to embodiments which are not covered by the claims are not presented as embodiments of the invention, but as examples useful for understanding the invention.

### BRIEF DESCRIPTION OF DRAWINGS

FIG. 1 is a schematic structural diagram of an implementation environment according to embodiments of this application;
FIG. 2 is a schematic logical structural diagram of a transmission unit according to an embodiment of this application;
FIG. 3-1 is a method flowchart of a reference signal transmission method according to an embodiment of this application;
FIG. 3-2 is a schematic distribution diagram of a reference signal according to an embodiment of this application;
FIG. 3-3 is a schematic distribution diagram of another reference signal according to an embodiment of this application;

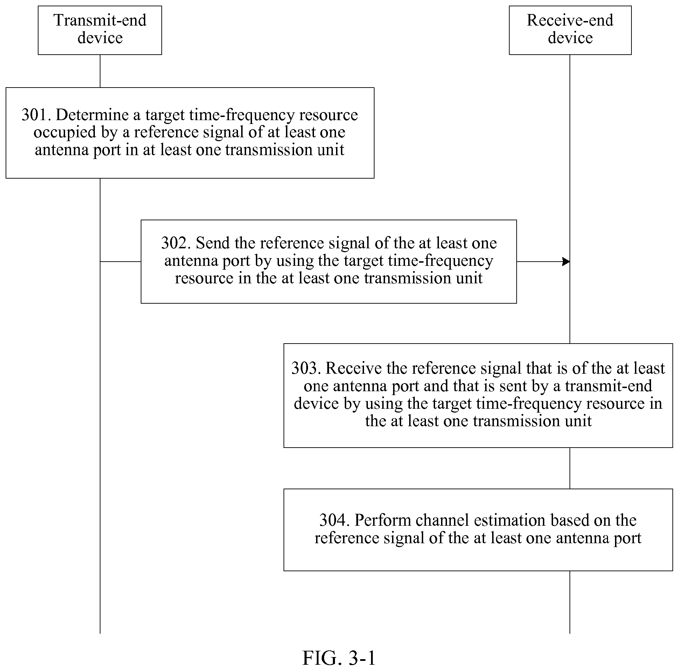

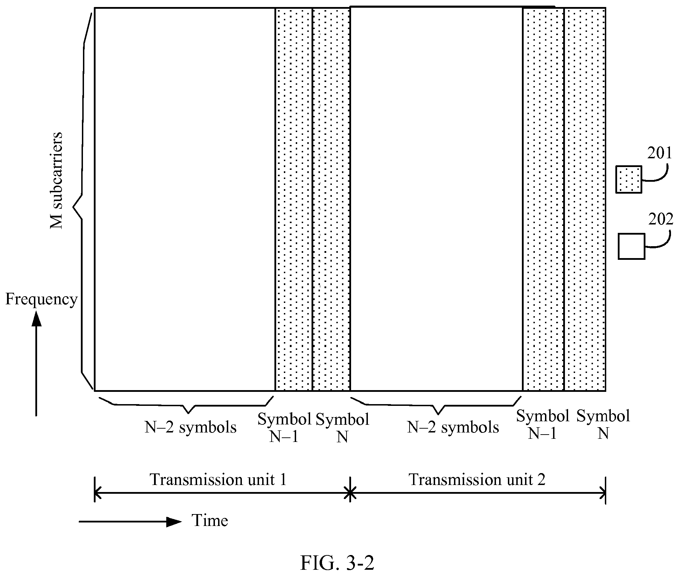

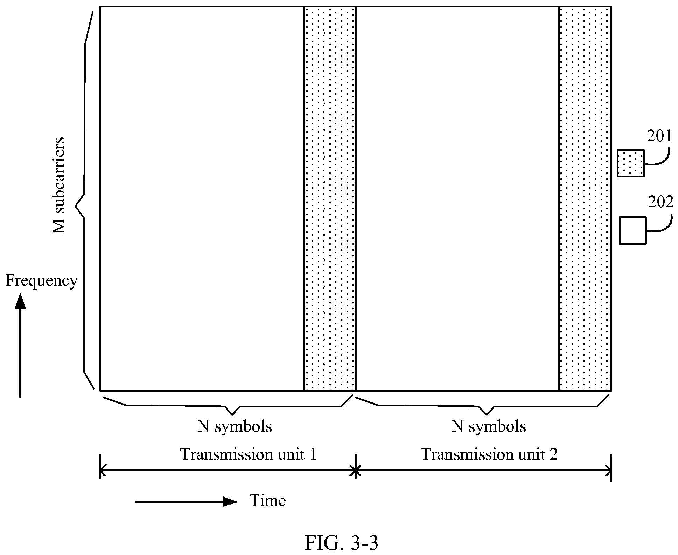

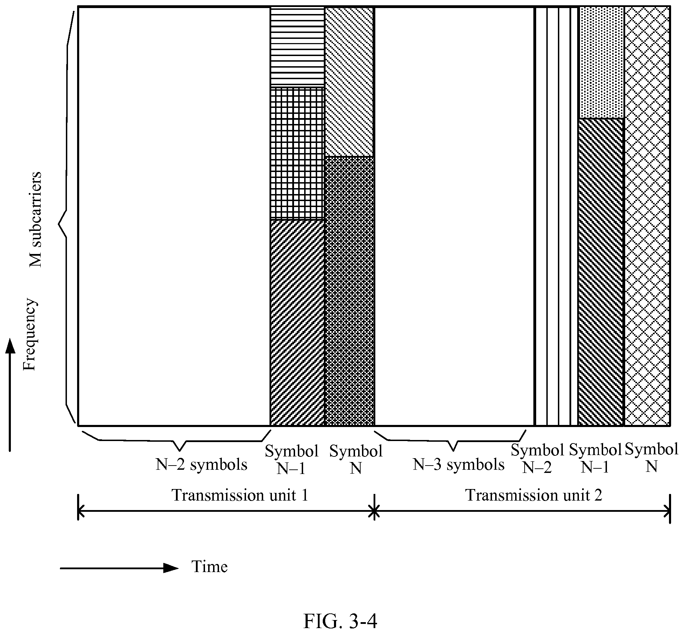

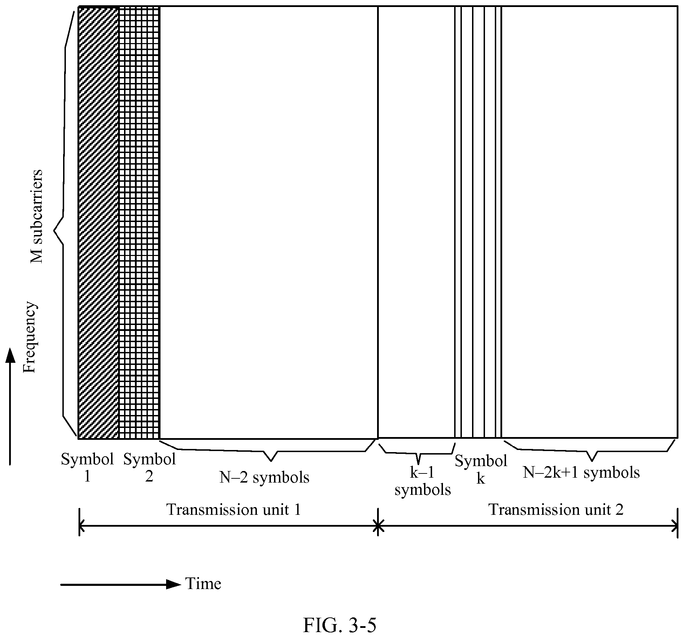

FIG. 3-4 is a schematic distribution diagram of still another reference signal according to an embodiment of this application;
FIG. 3-5 is a schematic diagram of a pilot pattern of yet another reference signal according to an embodiment of this application;

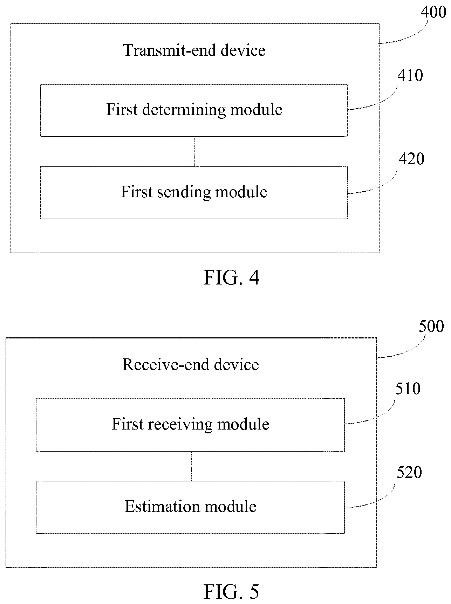

FIG. 4 is a block diagram of a transmit-end device according to an embodiment of this application;
FIG. 5 is a block diagram of a receive-end device according to an embodiment of this application;

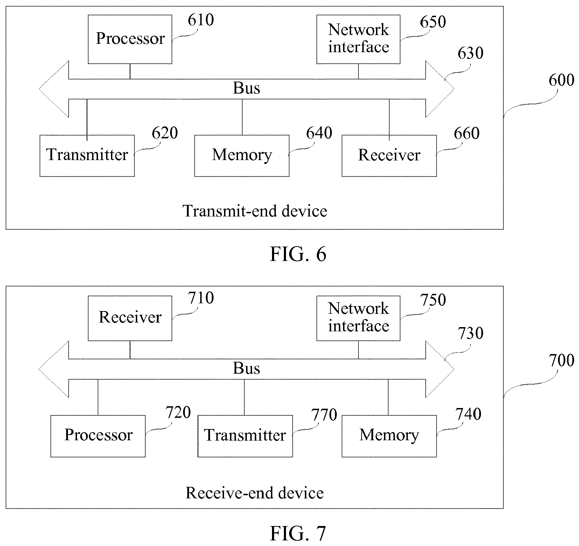

FIG. 6 is a schematic structural diagram of a transmit-end device according to an embodiment of this application;
FIG. 7 is a schematic structural diagram of a receive-end device according to an embodiment of this application; and

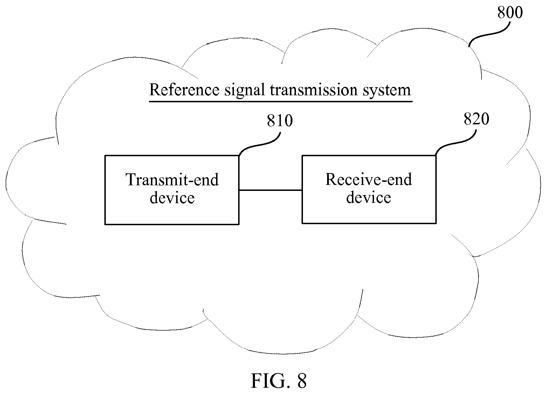

FIG. 8 is a schematic structural diagram of a reference signal transmission system according to an embodiment of this application.

### DESCRIPTION OF EMBODIMENTS

Before this application is specifically described, related technologies in this application are first described briefly:

A reference signal transmission method provided in the embodiments of this application is implemented based on an MIMO technology. The MIMO technology has some advantages in improving a capacity of a communications system and spectrum efficiency. Since emergence, the MIMO technology has always been a key technology in wireless communications. For example, the MIMO technology is applied to an LTE system. The LTE system is a mobile communications system of the 3rd Generation Partnership Project (English: 3rd Generation Partnership Project; 3GPP for short) of the Asynchronous Cellular Mobile Communications Standards Organization. Antenna selective transmit diversity of the MIMO technology is applied to uplink-based single carrier frequency division multiple access (English: Single-carrier Frequency-Division Multiple Access; SC-FDMA for short) in LTE, so that performance can be improved by using a space diversity gain in an uplink.

In a communications system, to send and receive data, obtain system synchronization, and feed back channel information, channel estimation, such as estimation of an uplink channel or a downlink channel, needs to be performed. A process in which the communications system compensates for signal distortion caused by fading resulting from a factor such as a multipath time delay to recover a sent signal is referred to as channel estimation. Channel estimation needs a reference signal. The reference signal is distributed in different resource elements (English: Resource Element; RE for short) (equivalent to a time-frequency unit in the following embodiments of this application) in time-frequency two-dimensional space in orthogonal frequency division multiplexing (English: Orthogonal Frequency Division Multiplexing; OFDM for short) symbols, and has a known amplitude and phase. In an MIMO system, each transmit antenna (virtual antenna or physical antenna) has an independent channel, and a receive-end device performs channel estimation on each antenna port based on a reference signal known by the receive-end device in advance, and generates a received signal based on related sending configuration information used for scheduling, link adaptation, and MIMO transmission. The channel estimation refers to a process of reconstructing a received signal to compensate for channel fading and noise, and an RS known by a transmit-end device and a receive-end device in advance is used to track a change of a channel in time domain and frequency domain. For example, in an uplink and a down link, to implement channel quality measurement of a multi-antenna system, a plurality of types of reference signals, such as a CRS, a CSI-RS, and an SRS, are separately defined in an LTE-A system, where the CRS and the CSI-RS are both used for downlink channel measurement corresponding to a physical antenna port. The SRS is a reference signal sent by user equipment to a base station to perform uplink measurement and scheduling. Specifically, during uplink channel measurement, the base station estimates an uplink channel by using the received SRS, and may perform, based on an estimation result, frequency selection, resource scheduling, power control, timing estimation, modulation/coding scheme order selection, downlink precoding generation in time division duplexing (English: Time Division Duplexing; TDD for short), and the like. The user equipment may periodically send the SRS to the base station, or may be triggered by the base station when the base station requests sending of the SRS and non-periodically send the SRS to the base station. However, in a current uplink subframe for sending the SRS, resource mappings of the SRS are the same, that is, a last symbol of the subframe. In other words, the user equipment maps the SRS to the last symbol of the current uplink subframe and sends the last symbol to the base station. A sending period of the SRS usually ranges from 2 ms to 320 ms (milliseconds). A specific period may be determined based on a higher-layer parameter configuration. Certainly, alternatively, no SRS may be sent through setting.

A remarkable feature of the fifth generation (English: Fifth Generation; 5G for short) New Radio technology (English: New Radio access technology; NR for short) system is to support both high and low frequency transmission. A disadvantage of the high frequency transmission is a serious path loss. In addition, because transmit power of the transmit-end device (user equipment) of the SRS is limited, accuracy of channel estimation during the high frequency transmission is reduced, and there is a problem of uplink coverage. To alleviate the serious path loss, a larger-scale antenna array is used during data and SRS sending to implement beam-based (English: beam-based) transmission, and this is a relatively effective solution.

For a massive MIMO (massive antenna) system working at a relatively low frequency (for example, 2.6 GHz), a most effective method for obtaining higher-order space freedom is to add a radio frequency (English: Radio Frequency; RF for short) channel after each antenna element. This is also a commonly used architecture in the industry. Use of such an architecture can implement frequency selective beamforming in a baseband digital domain. Such a beamforming scheme is referred to as digital beamforming. Obviously, adding one RF channel after each antenna element increases costs on one hand, and on the other hand, increases complexity of the system architecture. Consequently, such an architecture can be applied to a system with a relatively small quantity of antenna elements, but as a quantity of antenna elements gradually increases (for example, when the quantity of antenna elements reaches 256), the architecture of the digital beamforming seems insufficient in cost performance. In this case, analog beamforming (English: analog beamforming; ABF for short) and hybrid beamforming (English: hybrid beamforming; HBF for short) emerge to fit with this. The ABF is beamforming implemented in a radio frequency domain. The HBF is beamforming implemented in both the baseband digital domain and the radio frequency domain. In the foregoing two schemes of the ABF and the HBF, a quantity of RF channels used by the system is less than a quantity of antenna elements used by the system, and each RF channel drives a plurality of antenna elements by using static or semi-static analog weights. For example, to alleviate the serious path loss, the system uses a larger-scale antenna array to implement beam-based transmission, and there may be, for example, up to 256, 512, or even 1024 antennas. In this case, the ABF or the HBF is more economical.

However, as the ABF or the HBF is used in the NR system, a new ABF structure needs a specific design of an uplink channel measurement reference signal. This includes a brand new resource mapping rule and channel measurement reference signal pilot pattern. For example, an existing SRS single-symbol mapping cannot meet requirements on multi-analog beam steering and tracking. Therefore, how to design and formulate a reference signal mapping rule and a resource mapping scheme based on the NR beamforming structure becomes a problem that needs to be resolved urgently in an NR MIMO uplink.

It can be learned from the foregoing descriptions that, use of a spectrum greater than 6 G and use of a higher-dimensional antenna system in NR enables the beamforming schemes such as the ABF and the HBF to become solutions with higher cost performance. The ABF is beamforming implemented in time domain in terms of hardware, and is broadband beamforming. Therefore, at a time point, only one analogy beam can be measured. For the HBF, to measure a plurality of analog beams, reference signals corresponding to ports related to the analog beams need to be separately mapped in time. An existing reference signal resource configuration means that a mapped symbol can be used to measure only one or a very small quantity of analog beams. Obviously, this is insufficient. Therefore, the SRS solution cannot meet the requirements by using the ABF and the HBF.

In the prior art, the SRS is mapped to a last symbol in an uplink subframe in a single-symbol form. Such a mapping pattern (pattern) cannot well adapt to beam switching and steering mechanisms of the ABF. This is because in the ABF and HBF architectures, the ABF is analog domain beamforming, and to a great extent, only a time division multiplexing manner can be used for a reference signal corresponding to analog beam steering. If the analog beam steering and tracking are considered, but a mapping structure in the existing standard is directly evolved, that is, a plurality of symbols are designed at the end of the uplink subframe to carry the SRS, a symbol of the reference signal seriously affects effective transmission of uplink data. Therefore, to ensure both effectiveness and reliability of SRS and data transmission using the beamforming technology, it seems very important to properly allocate symbol resources corresponding to SRSs corresponding to a plurality of beams.

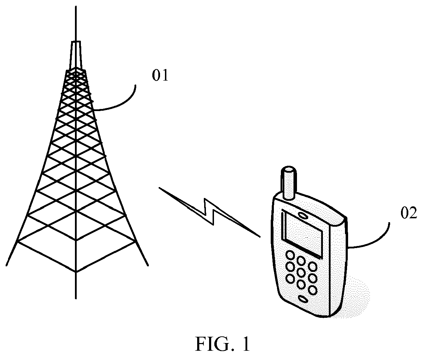

FIG. 1 is a schematic diagram of an implementation environment according to the embodiments of this application. The implementation environment provides a reference signal system. The reference signal system may be a wireless communications system. Referring to FIG. 1, the implementation environment may include a transmit-end device 01 and a receive-end device 02. The transmit-end device 01 may be an access network device, and the receive-end device 02 may be user equipment (English: User Equipment; UE for short).

The access network device is, for example, but not limited to: a base transceiver station (English: Base Transceiver Station; BTS for short) in a Global System for Mobile Communications (English: Global System for Mobile Communications; GSM for short), an NB (English: NodeB) in a Wideband Code Division Multiple Access (English: Wideband Code Division Multiple Access; WCDMA for short) system, an evolved NodeB (English: evolved Node B; eNB for short) in LTE, a relay station, an in-vehicle device, a wearable device, and an access network device in a future 5G communications system or an access network device in a future evolved public land mobile network (English: Public Land Mobile Network; PLMN for short) network.

In this implementation environment and the following embodiments, user equipment is to be described as UE in a general sense. In addition, the user equipment may alternatively be a mobile console, an access terminal, a subscriber unit, a subscriber station, a mobile station, a remote station, a remote terminal, a mobile device, a user terminal, a terminal, a wireless communications device, a user agent, a user apparatus, or the like. The user equipment may be a cellular phone, a cordless phone, a Session Initiation Protocol (English: Session Initiation Protocol; SIP for short) phone, a wireless local loop (English: Wireless Local Loop; WLL for short) station, a personal digital assistant (English: Personal Digital Assistant; PDA for short), a handheld device having a wireless communication function, a computing device, another processing device connected to a wireless modem, an in-vehicle device, a wearable device, a mobile console in a future 5G network, a terminal device in a future evolved PLMN network, or the like. In addition, the user equipment may further include a device, such as a relay (English: Relay), that can perform data communication with an access network device (such as a base station).

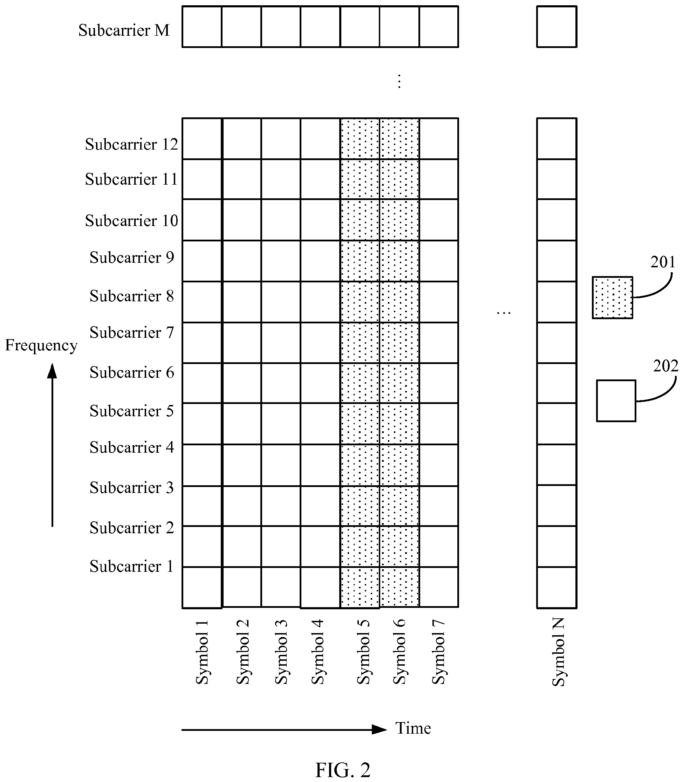

In this implementation environment and the following embodiments, a communication connection is established between the transmit-end device 01 and the receive-end device 02, and the transmit-end device 01 may communicate with the receive-end device 02 through the communication connection. In the wireless communications system, the communication connection is usually a wireless connection. A signal transmitted between the transmit-end device 01 and the receive-end device 02 during communication may include, but is not limited to, a reference signal, a data signal, and the like. The reference signal is, for example, a CRS, a CRS-RS, or an SRS in LTE. In this implementation environment and the following embodiments, that a reference signal is transmitted between the transmit-end device 01 and the receive-end device 02 is used as an example. The transmit-end device 01 may map the reference signal to at least one transmission unit to transmit the reference signal. The transmission unit may be shown in FIG. 2.

FIG. 2 is a schematic logical structural diagram of a transmission unit 200 according to an embodiment of this application. The transmission unit 200 may be equivalent to a physical resource block (English: Physical Resource Block; PRB for short) or a PRB pair (PRB pair) in an existing LTE system. Referring to FIG. 2, the transmission unit 200 includes N symbols in time domain and M subcarriers (English: Subcarrier) in frequency domain, where N and M are both integers, and values of M and N may be set based on a specific requirement in the following embodiments of this application. The transmission unit 200 includes a first part 201 and a second part 202. The first part 201 includes at least one symbol in time domain and at least one subcarrier in frequency domain. The at least one symbol includes a single symbol or a group of contiguous symbols. The at least one subcarrier includes a single subcarrier or a group of contiguous subcarriers. The second part 202 includes at least one symbol in time domain and at least one subcarrier in frequency domain. The at least one symbol includes a single symbol or a group of contiguous symbols. The at least one subcarrier includes a single subcarrier or a group of contiguous subcarriers. The group of contiguous subcarriers forming the first part 201 and the group of contiguous subcarriers forming the second part 202 may be a same group of contiguous subcarriers, or may be different groups of subcarriers. In FIG. 2, the first part 201 and the second part 202 are carried by a same group of contiguous subcarriers in frequency domain, and this group of subcarriers includes 12 subcarriers.

In addition, alternatively, the first part 201 may include a group of contiguous subcarriers (a subcarrier 1 to a subcarrier 8) in frequency domain, and the second part 202 may include another group of contiguous subcarriers (a subcarrier 4 to a subcarrier 12) in frequency domain. The first part 201 and the second part 202 separately occupy different symbols in time domain. In other words, the first part 201 and the second part 202 are distinguished from each other in time domain. For example, in FIG. 2, the first part 201 occupies two symbols: a symbol 5 and a symbol 6, and the second part 202 occupies N-2 symbols: a symbol 1, a symbol 2, a symbol 3, a symbol 4, and a symbol 7 to a symbol N.

In addition, alternatively, the first part 201 may include a plurality of non-contiguous symbols in time domain and a plurality of non-contiguous subcarriers in frequency domain, and the second part 202 may include a plurality of non-contiguous symbols in time domain and a plurality of non-contiguous subcarriers in frequency domain. For example, the first part 201 occupies a symbol 5 and a symbol 6, and is carried on a subcarrier 1 to a subcarrier 4, and a subcarrier 6 to a subcarrier 12, and the second part 202 occupies a symbol 1, a symbol 2, a symbol 3, and a symbol 4, and is carried on a subcarrier 3 to a subcarrier 8, and a subcarrier 10.

A minimum resource unit in the transmission unit 200 is a time-frequency unit (a small square in FIG. 2). One time-frequency unit may be equivalent to one resource element (English: Resource Element; RE for short) in an existing LTE system. Each time-frequency unit is carried by one subcarrier in frequency domain and one symbol in time domain.

It should be noted that, for ease of description, the transmission unit 200 shown in FIG. 2 is of a structure of a current LTE subframe. However, a person skilled in the art should understand that the transmission unit 200 may alternatively be of another structure. For example, a quantity of time-frequency units in the transmission unit 200, a quantity of subcarriers in the transmission unit in the foregoing same group of contiguous subcarriers, a quantity of symbols included in the first part 201, a quantity of symbols included in the second part 202, a quantity of subcarriers occupied by the first part 201, a quantity of subcarriers occupied by the second part 202, or the like may be set based on a specific requirement.

It should be noted that in an actual application, a location of the first part 201 in the transmission unit 200 is not merely limited to a location shown in FIG. 2, and a location of the second part 202 in the transmission unit 200 is not merely limited to a location shown in FIG. 2. In other words, the locations of the first part 201 and the second part 202 in the transmission unit 200 may be set based on a specific requirement. In addition, the transmission unit 200 may further include other parts than the first part 201 and the second part 202. The first part 201 may be adjacent to or may not be adjacent to the second part 202. This is not limited in this embodiment of this application.

In the transmission unit 200, the first part 201 includes a target time-frequency resource carrying a reference signal of at least one antenna port, and the target time-frequency resource occupies at least one symbol in the first part 201. For example, the target time-frequency resource occupies a single symbol in the first part 201, for example, a symbol 5 or a symbol 6, or the target time-frequency resource occupies two contiguous symbols in the first part 201, for example, a symbol 5 and a symbol 6. The second part 202 carries a data signal corresponding to the reference signal of the at least one antenna port. The target time-frequency resource may include all time-frequency units in the first part 201, or may include only some time-frequency units in the first part 201. For example, in FIG. 2, the target time-frequency resource includes one symbol (a symbol 5) in time domain and 12 subcarriers (a subcarrier 1 to a subcarrier 12) in frequency domain, or the target time-frequency resource includes two contiguous symbols (a symbol 5 and a symbol 6) in time domain and a group of contiguous subcarriers (a subcarrier 1 to a subcarrier 8) in frequency domain.

In addition, a time-frequency unit that is in the first part 201 and that does not carry the reference signal may also be used to carry a data signal. For example, the target time-frequency resource includes a symbol 5 and a symbol 6 in time domain and eight contiguous subcarriers (a subcarrier 1 to a subcarrier 8) in frequency domain, and time-frequency units (in time domain: the symbol 5 and the symbol 6, and in frequency domain: a subcarrier 9 to a subcarrier 12) in the first part 201 other than the target time-frequency resource may carry a data signal, to improve resource utilization.

In an actual application, one or more types of reference signals may be carried in a first part 201 in one transmission unit 200, or a plurality of types of reference signals may be carried in first parts 201 in a plurality of transmission units 200. For example, eight types of reference signals may be carried in a first part 201 in one transmission unit 200, or eight types of reference signals may be carried in two first parts 201 in two transmission units 200. The two transmission units 200 may be two contiguous transmission units. This is not limited in this embodiment of this application.

It should be noted that the symbol in this application may alternatively use another name, for example, a time unit. The subcarrier in this application may alternatively use another name, for example, a frequency unit. The transmission unit in this application may alternatively use another name, for example, a resource element. This is not limited in this embodiment of this application.

FIG. 3-1 is a method flowchart of a reference signal transmission method according to an embodiment of this application. This embodiment is described by using an example in which the reference signal transmission method is applied to the implementation environment shown in FIG. 1. Referring to FIG. 3, the reference signal transmission method includes the following steps.

Step 301. A transmit-end device determines a target time-frequency resource occupied by a reference signal of at least one antenna port in at least one transmission unit.

Each of the at least one transmission unit includes a first part, in each transmission unit, the target time-frequency resource is located on at least one symbol in the first part, and in the reference signal of the at least one antenna port, different reference signals are located in different transmission units in the at least one transmission unit. Optionally, each of the at least one transmission unit further includes a second part, in each transmission unit, a symbol on which the second part is located is different from a symbol on which the first part is located, and the second part carries a data signal corresponding to the reference signal of the at least one antenna port. For a specific logic diagram of each transmission unit, refer to FIG. 2. The transmission unit may be a transmission time interval (English: Transmission Time Interval; TTI for short) in LTE.

In this embodiment of this application, each of the at least one antenna port corresponds to one reference signal. Therefore, the reference signal of the at least one antenna port is at least one reference signal. The at least one antenna port is an antenna port used for data transmission (for example, subframe transmission). In an actual application, a quantity of antenna ports used for data transmission may be less than a maximum quantity of antenna ports supported by a wireless communication standard. Therefore, a quantity of the at least one antenna port is less than or equal to the maximum quantity of antenna ports supported by the wireless communication standard. For example, although a latest LTE standard supports a maximum of eight antenna ports, the quantity of the at least one antenna port is less than or equal to 8. For example, the quantity of the at least one antenna port is equal to 5. In an actual application, the transmit-end device may determine the quantity of the at least one antenna port based on a network configuration status, including a quantity of transmit and receive antennas, a transmission frequency band, a beamforming scheme, a quantity of analog beams to be steered/switched, or the like. This process has been described in detail in the prior art. Details are not described in this embodiment of this application.

Optionally, in this embodiment of this application, the at least one transmission unit includes at least two contiguous transmission units. For example, FIG. 3-2 to FIG. 3-5 each are a schematic diagram of at least one transmission unit according to an embodiment of this application. Referring to FIG. 3-2 to FIG. 3-5, the at least one transmission unit includes a transmission unit 1 and a transmission unit 2. The transmission unit 1 and the transmission unit 2 are two contiguous transmission units. According to the invention, the reference signal of the at least one antenna port is mapped to the at least two contiguous transmission units, so that the reference signal is centrally mapped in the transmission units. This is more suitable for a low-latency frame structure in NR. The design scheme makes channel estimation more efficient in time, and ensures that a new reference signal mapping scheme can achieve higher channel estimation accuracy in either a low-speed or a high-speed scenario. In addition, in the design scheme in this application, a quantity of antenna ports is increased, so that the quantity of antenna ports may be greater than 8, and data transmission of more data flows can be supported, thereby improving data transmission efficiency.

Optionally, in this embodiment of this application, in each transmission unit, the target time-frequency resource is located on any symbol in the first part, or the target time-frequency resource is located on any plurality of contiguous symbols in the first part. As shown in FIG. 3-2, in the transmission unit 1 and the transmission unit 2, the first part 201 includes a symbol N-1 and a symbol N. In the transmission unit 1, the target time-frequency resource may be located on the symbol N-1 or the symbol N, or the target time-frequency resource may be located on the symbol N-1 and the symbol N. Similarly, in the transmission unit 2, the target time-frequency resource may be located on the symbol N-1 or the symbol N, or the target time-frequency resource may be located on the symbol N-1 and the symbol N. As shown in FIG. 3-3, in the transmission unit 1 and the transmission unit 2, the first part 201 includes at least one symbol at the end. In the transmission unit 1, the target time-frequency resource may be located on last i symbols in the first part 201 in the transmission unit 1. In the transmission unit 2, the target time-frequency resource may be located on last j symbols in the first part 201 in the transmission unit 2. It should be noted that a mapping manner shown in FIG. 3-3 is a broadband mapping manner, and i and j are both integers greater than or equal to 1. According to the invention, the target time-frequency resource is located on any plurality of contiguous symbols in the first part, so that the reference signal of the at least one antenna port can be centrally mapped, thereby improving channel estimation accuracy.

It should be noted that description is provided herein by using an example in which the first part 201 is on last few symbols in the transmission unit, and the target time-frequency resource is on at least one symbol at the end of the transmission unit. In an actual application, the first part may be on any at least one contiguous or non-contiguous symbol in the transmission unit. This is not limited in this embodiment of this application. For example, as shown in FIG. 3-5, in the transmission unit 1, a symbol 1 and a symbol 2 may be symbols occupied by the first part in the transmission unit 1, and the target time-frequency resource may be located on the symbol 1 and/or the symbol 2 in the transmission unit 1; in the transmission unit 2, a symbol k may be a symbol occupied by the first part in the transmission unit 2, and the target time-frequency resource may be located on the symbol k in the transmission unit 2. It can be learned from FIG. 3-5 that the symbol 1 and the symbol 2 are located at the head of the transmission unit 1, and the symbol k is located in the middle of the transmission unit 2. In this embodiment of this application, in a same transmission unit, mapping a reference signal to a symbol other than a symbol at the end of the transmission unit can achieve fast feedback.

Optionally, in this embodiment of this application, each of the at least one symbol in the first part of each transmission unit carries at least one type of reference signal. For example, as shown in FIG. 3-4, in the transmission unit 1, the symbol N-1 carries at least three types of reference signals, and the symbol N carries at least two types of reference signals; in the transmission unit 2, a symbol N-2 and the symbol N each carry at least one type of reference signal, and the symbol N-1 carries at least two types of reference signals.

Optionally, in this embodiment of this application, in the reference signal of the at least one antenna port: a same reference signal is located in a same transmission unit in the at least one transmission unit, and different reference signals are located in a same transmission unit or different transmission units in the at least one transmission unit. For example, as shown in FIG. 3-4, a reference signal 1 may be located in the transmission unit 1 or the transmission unit 2, and the reference signal 1 and a reference signal 2 both may be located in the transmission unit 1 or the transmission unit 2, or the reference signal 1 is located in the transmission unit 1, and the reference signal 2 is located in the transmission unit 2.

Optionally, in this embodiment of this application, in the reference signal of the at least one antenna port, different reference signals located in a same transmission unit are distributed on a target time-frequency resource of the same transmission unit by using at least one multiplexing mode of time division multiplexing, frequency division multiplexing, and code division multiplexing. For a low-frequency band or high-order antenna, in the reference signal of the at least one antenna port, different reference signals located in a same transmission unit are distributed on a target time-frequency resource of the same transmission unit by using at least one multiplexing mode of time division multiplexing, frequency division multiplexing, and code division multiplexing. For a low-frequency band or low-order antenna, different reference signals located in a same transmission unit are distributed on a target time-frequency resource of the same transmission unit in a manner of frequency division multiplexing or code division multiplexing. The target time-frequency resource may include a plurality of time-frequency units. For example, referring to FIG. 3-4, the reference signal 1 and the reference signal 2 may be distributed on the symbol 1 and the symbol 2 through time division multiplexing, or the reference signal 1 and the reference signal 2 may be distributed on different subcarriers (for the subcarriers, refer to FIG. 2, and the subcarriers are not shown in FIG. 3-4) through frequency division multiplexing, or the reference signal 1 and the reference signal 2 may be distributed in a same time-frequency unit through code division multiplexing. For example, the reference signal 1 and the reference signal 2 may be distributed, through code division multiplexing, in a time-frequency unit including the symbol 1 and the subcarrier 1. Each symbol may correspond to one analog beam. This is not limited in this embodiment of this application.

It should be noted that, in this embodiment of this application, when different reference signals located in a same transmission unit are distributed on a target time-frequency resource of the same transmission unit through code division multiplexing, the different reference signals may be distinguished by using a pilot sequence. Therefore, during mapping of the reference signal, the transmit-end device may further generate a pilot sequence. The pilot sequence may include, but is not limited to, a ZC (English: Zadoff-Chu) sequence.

Optionally, in this embodiment of this application, the target time-frequency resource includes a plurality of time-frequency units, and in the target time-frequency resource, a quantity of time-frequency units carrying a same reference signal is associated with a quantity of reference signals associated with the target time-frequency resource. For example, if the quantity of time-frequency units of the target time-frequency resource remains unchanged, a quantity of time-frequency units carrying a same reference signal of an antenna port decreases as a quantity of antenna ports associated with the target time-frequency resource increases, and increases as the quantity of antenna ports associated with the target time-frequency resource decreases. It should be noted that, this embodiment of this application is described by using an example in which the quantity of time-frequency units of the target time-frequency resource remains unchanged. In an actual application, the quantity of time-frequency units of the target time-frequency resource may not be limited. In this way, the quantity of time-frequency units carrying a same reference signal of an antenna port may not be limited, and can either decrease as the quantity of antenna ports associated with the target time-frequency resource increases, or increase as the quantity of antenna ports associated with the target time-frequency resource increases. This is not limited in this embodiment of this application.

In the technical solution provided in this embodiment of this application, the quantity of time-frequency units on the target time-frequency resource that carry the same reference signal of the antenna port may be set based on the quantity of antenna ports associated with the target time-frequency resource. Therefore, the technical solution provided in this embodiment of this application makes reference signal resource allocation more flexible. When there are a relatively large quantity of antenna ports, the quantity of time-frequency units that carry the same reference signal may be reduced to support a larger quantity of antenna ports. When there are a relatively small quantity of antenna ports, the quantity of time-frequency units that carry the same reference signal may be increased to achieve higher channel estimation accuracy.

Optionally, in this embodiment of this application, on the target time-frequency resource, quantities of time-frequency units that carry different reference signals of antennas may be the same or may be different. This makes a mapping rule of the reference signal more flexible.

It should be noted that the foregoing description is provided by using an example in which the at least one transmission unit includes two contiguous transmission units. In an actual application, the at least one transmission unit may alternatively include a larger quantity of transmission units, and the larger quantity of transmission units may be contiguous or non-contiguous. The transmit-end device may set the quantity of the transmission units and set the transmission units to be contiguous or non-contiguous based on current channel quality. For example, when the channel quality deteriorates (for example, when a channel environment fluctuates greatly, a change occurs fast, or UE moves at a relatively high speed), the quantity of transmission units may be set smaller, and these transmission units may be contiguous. Optionally, the reference signal of the at least one antenna port may be mapped to at least one transmission unit, to improve transmission reliability. When the channel quality is improved (for example, when a channel environment fluctuates slightly, a change occurs slowly, or UE moves at a relatively low speed), the quantity of transmission units may be set larger, and these transmission units may be non-contiguous. Optionally, the reference signal of the at least one antenna port may be mapped to a plurality of transmission units, to improve data transmission efficiency. According to the reference signal transmission method provided in this embodiment of this application, the quantity of the at least one transmission unit is configurable, and a quantity of symbols in each transmission unit that are used to carry a reference signal is also configurable. When there is a relatively great demand for information transmission (such as uplink information transmission), the reference signal of the at least one antenna port may be mapped to a plurality of contiguous transmission units. When a channel changes fast, it is more important to emphasize the transmission reliability. In this case, the reference signal of the at least one antenna port may be mapped to a small quantity of transmission units, so that the reference signal of the at least one antenna port can be centrally mapped.

Step 302. The transmit-end device sends the reference signal of the at least one antenna port to a receive-end device by using the target time-frequency resource in the at least one transmission unit.

After determining the target time-frequency resource occupied by the reference signal of the at least one antenna port in the at least one transmission unit, the transmit-end device may send the reference signal of the at least one antenna port to the receive-end device by using the target time-frequency resource in the at least one transmission unit. Before sending the reference signal of the at least one antenna port, the transmit-end device may map, based on the target time-frequency resource occupied by the reference signal of the at least one antenna port in the at least one transmission unit, the reference signal of the at least one antenna port to the target time-frequency resource occupied in the at least one transmission unit.

It should be noted that, to improve channel estimation accuracy of the receive-end device, after mapping the reference signal of the at least one antenna port to the target time-frequency resource in the at least one transmission unit, the transmit-end device may determine configuration indication information and send the configuration indication information to the receive-end device, so that the receive-end device can determine, based on the configuration indication information, a time-frequency unit in which each of the reference signal of the at least one antenna port is located, and obtain the reference signal from the time-frequency unit in which the reference signal is located, to further obtain the reference signal of the at least one antenna port. The transmit-end device may determine a reference signal resource allocation and mapping scheme based on a transmission scenario (for example, depending on whether the transmission scenario is a low-delay transmission scenario) and a communication requirement (for example, information related to a movement speed of the receive-end device), and then generate the configuration indication information based on the reference signal resource allocation and mapping scheme. The transmit-end device may send the configuration indication information to the receive-end device by using dynamic signaling or semi-static signaling. When the transmit-end device is a base station and the receive-end device is UE, the dynamic signaling is, for example, downlink control information (English: Downlink Control Information; DCI for short) signaling in LTE, and the semi-static signaling is, for example, a Radio Resource Control (English: Radio Resource Control; RRC for short) message in LTE. In other words, the transmit-end device may send the configuration indication information to the receive-end device by using DCI signaling or an RRC message. In a high-speed scenario (in which the receive-end device moves at a relatively high speed), the transmit-end device may send the configuration indication information to the receive-end device by using dynamic signaling. When a channel changes slowly, the transmit-end device may send the configuration indication information to the receive-end device by using semi-static signaling. This is not limited in this embodiment of this application.

In this embodiment of this application, on one hand, the configuration indication information includes a quantity of transmission units occupied by the reference signal of the at least one antenna port and a quantity of symbols occupied by the reference signal of the at least one antenna port in the transmission unit; and location information of a symbol on which each of the reference signal of the at least one antenna port is located, the location information includes at least one of a symbol identifier and a location offset value, and the location offset value of the symbol on which each reference signal is located is a location offset value between the symbol on which the reference signal is located and a last symbol of a transmission unit in which the reference signal is located. Optionally, the configuration indication information may further include information about a multiplexing mode between reference signals carried on the target time-frequency resource in the same transmission unit. In each transmission unit, the symbol identifier may uniquely indicate one symbol. Therefore, a symbol on which a reference signal is located may be determined based on a symbol identifier. In this embodiment of this application, the transmit-end device may agree with the receive-end device on mapping a reference signal to last at least one symbol in the first part in each transmission unit. However, in an actual application, the transmit-end device may map a reference signal to any symbol in the first part in each transmission unit. In this case, a location offset value between the symbol on which the reference signal is located and the last symbol in the first part in each transmission unit may be used to indicate a location of the symbol on which the reference signal is located.

On the other hand, the configuration indication information includes port mapping information, and the port mapping information is used to indicate a correspondence among each of the reference signal of the at least one antenna port, a transmission unit occupied by the reference signal, and a symbol occupied by the reference signal in the transmission unit occupied by the reference signal.

Step 303. The receive-end device receives the reference signal that is of the at least one antenna port and that is sent by the transmit-end device by using the target time-frequency resource in the at least one transmission unit.

When the transmit-end device sends the reference signal of the at least one antenna port to the receive-end device by using the target time-frequency resource in the at least one transmission unit, the receive-end device may receive the reference signal that is of the at least one antenna port and that is sent by the transmit-end device to the receive-end device by using the target time-frequency resource in the at least one transmission unit.

It should be noted that, before receiving the reference signal that is of the at least one antenna port and that is sent by the transmit-end device by using the target time-frequency resource in the at least one transmission unit, the receive-end device may first receive the configuration indication information sent by the transmit-end device, and then receive, based on the configuration indication information, the reference signal that is of the at least one antenna port and that is sent by using the target time-frequency resource in the at least one transmission unit. Optionally, because the transmit-end device may send the configuration indication information to the receive-end device by using the dynamic signaling or the semi-static signaling, the receive-end device may receive the configuration indication information sent by the transmit-end device by using the dynamic signaling or the semi-static signaling. When the transmit-end device is a base station and the receive-end device is UE, the dynamic signaling is, for example, DCI signaling in LTE, and the semi-static signaling is, for example, a Radio Resource Control RRC message in LTE. In other words, the receive-end device receives the configuration indication information sent by the transmit-end device by using the DCI signaling or the RRC message. This is not limited in this embodiment of this application.

As described in step 302, in this embodiment of this application, the configuration indication information may include the quantity of transmission units occupied by the reference signal of the at least one antenna port, the quantity of symbols occupied by the reference signal of the at least one antenna port in the transmission unit, the location information of the symbol on which each of the reference signal of the at least one antenna port is located, and the information about the multiplexing mode between reference signals carried on a target time-frequency resource in the same transmission unit. The configuration indication information may alternatively include the port mapping information, and the port mapping information is used to indicate the correspondence among each of the reference signal of the at least one antenna port, a transmission unit occupied by the reference signal, and a symbol occupied by the reference signal in the transmission unit occupied by the reference signal. The receive-end device may determine, based on the quantity of transmission units occupied by the reference signal of the at least one antenna port, the quantity of symbols occupied by the reference signal of the at least one antenna port in the transmission unit, the location information of the symbol on which each of the reference signal of the at least one antenna port is located, and the information about the multiplexing mode between the reference signals carried on the target time-frequency resource in the same transmission unit, a time-frequency unit in which each of the reference signal of the at least one antenna port is located, to obtain the reference signal from the time-frequency unit in which each reference signal is located, to further obtain the reference signal of the at least one antenna port. The receive-end device may alternatively determine, based on the port mapping information, a time-frequency unit in which a reference signal of each of the at least one antenna port is located, to further obtain the reference signal of each antenna port from the time-frequency unit in which the reference signal of each antenna port is located, to obtain the reference signal of the at least one antenna port.

Step 304. The receive-end device performs channel estimation based on the reference signal of the at least one antenna port.

After receiving the reference signal of the at least one antenna port, the receive-end device may perform channel estimation based on the reference signal of the at least one antenna port, to perform a subsequent possible operation such as resource scheduling or power control. For a process in which the receive-end device performs channel estimation based on the reference signal of the at least one antenna port, refer to the related art. Details are not described in this embodiment of this application.

It should be noted that, according to the reference signal transmission method provided in this embodiment of this application, all reference signals of antenna ports can be properly distributed in a plurality of contiguous transmission units during one transmission, thereby preventing all the reference signals of the ports from being mapped to a transmission unit, and ensuring that a data transmission resource is not greatly affected. Certainly, according to the reference signal transmission method provided in this embodiment of this application, a current scenario and a transmission requirement need to be jointly considered to determine how to map a reference signal, so that reference signal resource overheads and a channel information obtaining delay can be better considered in balance.

In conclusion, according to the reference signal transmission method provided in this embodiment of this application, the reference signal of the at least one antenna port is on the target time-frequency resource in the at least one transmission unit, each of the at least one transmission unit includes the first part, and in each transmission unit, the target time-frequency resource is located on the at least one symbol in the first part, thereby helping resolve the problem of inflexible reference signal transmission and improve reference signal transmission flexibility.

In the prior art, a reference signal is mapped to a last symbol in a same subframe in a single-symbol form, and ABF is analog domain beamforming. Therefore, only time division multiplexing can be used for a reference signal of corresponding analog beam steering to a great extent. However, although in the prior art, a reference signal can be mapped to last few symbols in a same subframe, there are more reference signals as an NR standard develops. Therefore, a quantity of symbols for carrying a data signal in the same subframe is reduced, greatly affecting effectiveness and reliability of data transmission. According to the reference signal transmission method provided in this embodiment of this application, the reference signal of the at least one antenna port is on the target time-frequency resource in the at least one transmission unit, and the target time-frequency resource is located on the at least one symbol in the first part in the transmission unit. Therefore, in the same transmission unit (which is equivalent to a subframe in LTE), a quantity of symbols for carrying a data signal is not reduced, so that effectiveness and reliability of data transmission can be improved. In addition, according to the reference signal transmission method provided in this embodiment of this application, the quantity of the at least one transmission unit and the quantity of the at least one symbol can be determined based on a channel status, so that a channel estimation accuracy requirement can be met.

According to the reference signal transmission method provided in this embodiment of this application, on one hand, a plurality of symbols are allocated to implement mapping of all reference signals of antenna ports during one transmission, so that requirements on multi-analog beam steering and tracking and beam selection can be met. On the other hand, all the reference signals of the antenna ports during one transmission are mapped to at least one transmission unit, so that the reference signals of the ports can be prevented from all being mapped to a transmission unit, thereby ensuring effectiveness and reliability of data transmission.

The reference signal transmission method provided in this embodiment of this application provides an architecture that can support different NR beamforming schemes (such as ABF and HBF used in a high-frequency spectrum), so that resource utilization and measurement accuracy can be improved. In addition, a reference signal low-density configuration is introduced to each subframe, so that channel information can be more effectively measured.

The reference signal transmission method provided in this embodiment of this application provides a reference signal mapping rule and mapping scheme meeting an NR requirement, so that the reference signal mapping scheme better adapts to an ABF structure and an HBF structure in NR, and configuration indication information is determined so that a new design scheme can make data transmission more efficient on a resource while ensuring that estimation performance is not greatly degraded.

The reference signal transmission method provided in this embodiment of this application can better support a digital beamforming mode, an analog beamforming mode, or a hybrid beamforming mode, and can support channel measurement of a larger quantity of antenna ports. This solution can achieve better balance between overheads of a reference signal and a reference signal obtaining delay in a single transmission unit, and meet different requirements on robustness and transmission efficiency. In addition, configuration indication information (such as a quantity of transmission units, or a quantity of symbols for mapping a reference signal in each transmission unit) is used, thereby facilitating more flexible beam tracking, beam selection, and beam switching.

The following is a device embodiment of this application, and may be used to perform the method embodiments of this application. For details not disclosed in the device embodiment of this application, refer to the method embodiments of this application.

FIG. 4 is a block diagram of a transmit-end device 400 according to an embodiment of this application. The transmit-end device 400 may be the transmit-end device 01 in the implementation environment shown in FIG. 1. Referring to FIG. 4, the transmit-end device 400 may include but is not limited to:
a first determining module 410, configured to determine a target time-frequency resource occupied by a reference signal of at least one antenna port in at least one transmission unit, where each of the at least one transmission unit includes a first part, and in each transmission unit, the target time-frequency resource is located on at least one symbol in the first part; and
a first sending module 420, configured to send the reference signal of the at least one antenna port to a receive-end device by using the target time-frequency resource in the at least one transmission unit.

Optionally, the transmit-end device 400 further includes: a second determining module, configured to determine configuration indication information, where the configuration indication information includes a quantity of transmission units occupied by the reference signal of the at least one antenna port and a quantity of symbols occupied by the reference signal of the at least one antenna port in the transmission unit; and
a second sending module, configured to send the configuration indication information to the receive-end device.

Optionally, the configuration indication information further includes location information of a symbol on which each of the reference signal of the at least one antenna port is located, the location information includes at least one of a symbol identifier and a location offset value, and the location offset value of the symbol on which each reference signal is located is a location offset value between the symbol on which the reference signal is located and a last symbol of a transmission unit in which the reference signal is located.

Optionally, the transmit-end device 400 further includes: a third sending module, configured to determine configuration indication information, where the configuration indication information includes port mapping information, and the port mapping information is used to indicate a correspondence among each of the reference signal of the at least one antenna port, a transmission unit occupied by the reference signal, and a symbol occupied by the reference signal in the transmission unit occupied by the reference signal; and
a third sending module, configured to send the configuration indication information to the receive-end device.

Optionally, the second sending module or the third sending module is configured to: send the configuration indication information to the receive-end device by using dynamic signaling; or send the configuration indication information to the receive-end device by using semi-static signaling.

In conclusion, according to the transmit-end device provided in this embodiment of this application, the reference signal of the at least one antenna port is on the target time-frequency resource in the at least one transmission unit, each of the at least one transmission unit includes the first part, and in each transmission unit, the target time-frequency resource is located on the at least one symbol in the first part, thereby helping resolve the problem of inflexible reference signal transmission and improve reference signal transmission flexibility.

FIG. 5 is a block diagram of a receive-end device 500 according to an embodiment of this application. The receive-end device 500 may be the receive-end device 02 in the implementation environment shown in FIG. 1. Referring to FIG. 5, the receive-end device 500 may include but is not limited to:
a first receiving module 510, configured to receive a reference signal that is of at least one antenna port and that is sent by a transmit-end device by using a target time-frequency resource in at least one transmission unit, where each of the at least one transmission unit includes a first part, and in each transmission unit, the target time-frequency resource is located on at least one symbol in the first part; and
an estimation module 520, configured to perform channel estimation based on the reference signal of the at least one antenna port.

Optionally, the receive-end device further includes: a second receiving module, configured to receive configuration indication information sent by the transmit-end device, where the configuration indication information includes a quantity of transmission units occupied by the reference signal of the at least one antenna port and a quantity of symbols occupied by the reference signal of the at least one antenna port in the transmission unit.

Optionally, the configuration indication information further includes location information of a symbol on which each of the reference signal of the at least one antenna port is located, the location information includes at least one of a symbol identifier and a location offset value, and the location offset value of the symbol on which each reference signal is located is a location offset value between the symbol on which the reference signal is located and a last symbol of a transmission unit in which the reference signal is located.

Optionally, the receive-end device further includes: a third receiving module, configured to receive configuration indication information sent by the transmit-end device, where the configuration indication information includes port mapping information, and the port mapping information is used to indicate a correspondence among each of the reference signal of the at least one antenna port, a transmission unit occupied by the reference signal, and a symbol occupied by the reference signal in the transmission unit occupied by the reference signal.

Optionally, the second receiving module or the third receiving module is configured to: receive, by the receive-end device, the configuration indication information sent by the transmit-end device by using dynamic signaling; or receive, by the receive-end device, the configuration indication information sent by the transmit-end device by using semi-static signaling.

In conclusion, according to the receive-end device provided in this embodiment of this application, the reference signal of the at least one antenna port is on the target time-frequency resource in the at least one transmission unit, each of the at least one transmission unit includes the first part, and in each transmission unit, the target time-frequency resource is located on the at least one symbol in the first part, thereby helping resolve the problem of inflexible reference signal transmission and improve reference signal transmission flexibility.

It should be noted that: reference signal transmission between the receive-end device and the transmit-end device provided in the foregoing embodiments is described only by using an example of division of the foregoing function modules. In an actual application, the foregoing functions may be distributed, based on requirements, to different function modules for completion, that is, the internal structure of the device is divided into different function modules, to complete all or some of the functions described above. In addition, the transmit-end device, the receive-end device, and the reference signal transmission method embodiments provided in the foregoing embodiments belong to a same concept. For a specific implementation process, refer to the method embodiment for details. The details are not described herein again.

FIG. 6 is a schematic structural diagram of a transmit-end device 600 according to an embodiment of this application. The transmit-end device 600 may be the transmit-end device 01 in the implementation environment shown in FIG. 1, and is configured to perform a partial method provided in the embodiment shown in FIG. 3-1. Referring to FIG. 6, the transmit-end device 600 may include a processor 610 and a transmitter 620. The processor 610 is connected to the transmitter 620 by using a bus 630.

The processor 610 includes one or more processing cores. The processor 610 runs a software program and a unit to execute various functional applications and perform data processing.

Optionally, as shown in FIG. 6, the transmit-end device 600 further includes a memory 640, a network interface 650, and a receiver 660. The memory 640, the network interface 650, and the receiver 660 are separately connected to the transmitter 620 and the processor 610 by using the bus 630.

There may be a plurality of network interfaces 650, and the network interface 650 is used by the transmit-end device 600 to communicate with another storage device or network device. The network interface 650 is optional. In an actual application, the transmit-end device 600 may communicate with another storage device or a network device by using the transmitter 620 and the receiver 660. Therefore, there may be no network interface in the transmit-end device 600. This is not limited in this embodiment of this application.

The processor 610 is configured to determine a target time-frequency resource occupied by a reference signal of at least one antenna port in at least one transmission unit, where each of the at least one transmission unit includes a first part, and in each transmission unit, the target time-frequency resource is located on at least one symbol in the first part.

The transmitter 620 is configured to send the reference signal of the at least one antenna port to a receive-end device by using the target time-frequency resource in the at least one transmission unit.

Optionally, the processor 610 is further configured to determine configuration indication information, where the configuration indication information includes a quantity of transmission units occupied by the reference signal of the at least one antenna port and a quantity of symbols occupied by the reference signal of the at least one antenna port in the transmission unit.

The transmitter 610 is further configured to send the configuration indication information to the receive-end device.

Optionally, the configuration indication information further includes location information of a symbol on which each of the reference signal of the at least one antenna port is located, the location information includes at least one of a symbol identifier and a location offset value, and the location offset value of the symbol on which each reference signal is located is a location offset value between the symbol on which the reference signal is located and a last symbol of a transmission unit in which the reference signal is located.

Optionally, the processor 610 is further configured to determine configuration indication information, where the configuration indication information includes port mapping information, and the port mapping information is used to indicate a correspondence among each of the reference signal of the at least one antenna port, a transmission unit occupied by the reference signal, and a symbol occupied by the reference signal in the transmission unit occupied by the reference signal.

The transmitter 610 is further configured to send the configuration indication information to the receive-end device.

Optionally, the transmitter 610 is further configured to: send, by the transmit-end device, the configuration indication information to the receive-end device by using dynamic signaling; or send, by the transmit-end device, the configuration indication information to the receive-end device by using semi-static signaling.

In conclusion, according to the transmit-end device provided in this embodiment of this application, the reference signal of the at least one antenna port is on the target time-frequency resource in the at least one transmission unit, each of the at least one transmission unit includes the first part, and in each transmission unit, the target time-frequency resource is located on the at least one symbol in the first part, thereby helping resolve the problem of inflexible reference signal transmission and improve reference signal transmission flexibility.

FIG. 7 is a schematic structural diagram of a receive-end device 700 according to an embodiment of this application. The receive-end device 700 may be the receive-end device 02 in the implementation environment shown in FIG. 1, and is configured to perform a partial method provided in the embodiment shown in FIG. 3-1. Referring to FIG. 7, the receive-end device 700 may include a receiver 710 and a processor 720. The receiver 710 is connected to the processor 720 by using a bus 730.

The processor 720 includes one or more processing cores. The processor 720 runs a software program and a unit to execute various functional applications and perform data processing.

Optionally, as shown in FIG. 7, the transmit-end device 700 further includes a memory 740, a network interface 750, and a transmitter 770. The memory 740, the network interface 750, and the transmitter 770 are separately connected to the transmitter 770 and the processor 720 by using the bus 730.

There may be a plurality of network interfaces 750, and the network interface 750 is used by the transmit-end device 700 to communicate with another storage device or network device. The network interface 750 is optional. In an actual application, the transmit-end device 700 may communicate with another storage device or a network device by using the transmitter 770 and the transmitter 770. Therefore, there may be no network interface in the transmit-end device 700. This is not limited in this embodiment of this application.

The receiver 710 is configured to receive a reference signal that is of at least one antenna port and that is sent by a transmit-end device by using a target time-frequency resource in at least one transmission unit, where each of the at least one transmission unit includes a first part, and in each transmission unit, the target time-frequency resource is located on at least one symbol in the first part.

The processor 720 is configured to perform channel estimation based on the reference signal of the at least one antenna port.

Optionally, the receiver 710 is further configured to receive configuration indication information sent by the transmit-end device, where the configuration indication information includes a quantity of transmission units occupied by the reference signal of the at least one antenna port and a quantity of symbols occupied by the reference signal of the at least one antenna port in the transmission unit.

Optionally, the configuration indication information further includes location information of a symbol on which each of the reference signal of the at least one antenna port is located, the location information includes at least one of a symbol identifier and a location offset value, and the location offset value of the symbol on which each reference signal is located is a location offset value between the symbol on which the reference signal is located and a last symbol of a transmission unit in which the reference signal is located.

Optionally, the receiver 710 is further configured receive configuration indication information sent by the transmit-end device, where the configuration indication information includes port mapping information, and the port mapping information is used to indicate a correspondence among each of the reference signal of the at least one antenna port, a transmission unit occupied by the reference signal, and a symbol occupied by the reference signal in the transmission unit occupied by the reference signal.

Optionally, the receiver 710 is further configured to: receive the configuration indication information sent by the transmit-end device by using dynamic signaling; or receive the configuration indication information sent by the transmit-end device by using semi-static signaling.

In conclusion, according to the receive-end device provided in this embodiment of this application, the reference signal of the at least one antenna port is on the target time-frequency resource in the at least one transmission unit, each of the at least one transmission unit includes the first part, and in each transmission unit, the target time-frequency resource is located on the at least one symbol in the first part, thereby helping resolve the problem of inflexible reference signal transmission and improve reference signal transmission flexibility.

Optionally, in the embodiments shown in FIG. 4 to FIG. 7, the at least one transmission unit includes at least two contiguous transmission units.

Optionally, in the embodiments shown in FIG. 4 to FIG. 7, in each transmission unit, the target time-frequency resource is located on any symbol in the first part, or the target time-frequency resource is located on any plurality of contiguous symbols in the first part.

Optionally, in the embodiments shown in FIG. 4 to FIG. 7, each of the at least one symbol in the first part of each transmission unit carries at least one type of reference signal.

Optionally, in the embodiments shown in FIG. 4 to FIG. 7, in the at least one transmission unit, quantities of symbols on which target time-frequency resources in different transmission units are located are equal or not equal.

Optionally, in the embodiments shown in FIG. 4 to FIG. 7, in the reference signal of the at least one antenna port, a same reference signal is located in a same transmission unit in the at least one transmission unit, and the at least one transmission unit includes a transmission unit carrying at least two different reference signals.

Optionally, in the embodiments shown in FIG. 4 to FIG. 7, in the reference signal of the at least one antenna port, different reference signals located in a same transmission unit are distributed on a target time-frequency resource of the same transmission unit by using at least one multiplexing mode of time division multiplexing, frequency division multiplexing, and code division multiplexing.

Optionally, in the embodiments shown in FIG. 4 to FIG. 7, each transmission unit further includes a second part, and in each transmission unit, a symbol on which the second part is located is different from a symbol on which the first part is located.

Optionally, in the embodiments shown in FIG. 4 to FIG. 7, the target time-frequency resource includes a plurality of time-frequency units, and in the target time-frequency resource, a quantity of time-frequency units carrying a same reference signal is associated with a quantity of reference signals associated with the target time-frequency resource.

FIG. 8 is a schematic structural diagram of a reference signal transmission system 800 according to an embodiment of this application. Referring to FIG. 8, the reference signal transmission system 800 may include a transmit-end device 810 and a receive-end device 820.

In a possible implementation, the transmit-end device 810 is the transmit-end device 400 shown in FIG. 4, and the receive-end device 820 is the receive-end device 500 shown in FIG. 5.

In another possible implementation, the transmit-end device 810 is the transmit-end device 600 shown in FIG. 6, and the receive-end device 820 is the receive-end device 700 shown in FIG. 7.

In conclusion, according to the reference signal transmission system provided in this embodiment of this application, the reference signal of the at least one antenna port is on the target time-frequency resource in the at least one transmission unit, each of the at least one transmission unit includes the first part, and in each transmission unit, the target time-frequency resource is located on the at least one symbol in the first part, thereby helping resolve the problem of inflexible reference signal transmission and improve reference signal transmission flexibility.

An embodiment of this application further provides a computer readable storage medium. The computer readable storage medium stores an instruction. When the computer readable storage medium runs on a computer, the computer is caused to perform related steps of the reference signal transmission method provided in the embodiment shown in FIG. 3-1.

An embodiment of this application further provides a computer readable storage medium. The computer readable storage medium stores an instruction. When the computer readable storage medium runs on a computer, the computer is caused to perform related steps of the reference signal transmission method provided in the embodiment shown in FIG. 3-1.

An embodiment of this application further provides a computer program product including an instruction. When the computer program product is run on a computer, the computer is caused to perform related steps of the reference signal transmission method provided in the embodiment shown in FIG. 3-1.

An embodiment of this application further provides a computer program product including an instruction. When the computer program product is run on a computer, the computer is caused to perform related steps of the reference signal transmission method provided in the embodiment shown in FIG. 3-1.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may understand that all or some of the steps of the embodiments may be implemented by hardware or a program instructing related hardware. The program may be stored in a computer-readable storage medium. The storage medium may include a read-only memory, a magnetic disk, or an optical disc.

The foregoing descriptions are merely optional embodiments of this application, but are not intended to limit this application. Any modification, equivalent replacement, or improvement made without departing from the principle of this application should fall within the protection scope of this application as defined by the appended claims.

## Claims

1. A reference signal transmission method, wherein the method comprises:
determining (301), by a transmit-end device, a target time-frequency resource occupied by a a plurality of reference signals in a plurality of transmission units comprising a plurality of symbols and subcarriers, wherein each of the plurality of reference signals corresponds to at least one antenna port, wherein each of the plurality of transmission units comprises a first part, in each transmission unit, the target time-frequency resource is located on at least one symbol of the plurality of symbols in the first part, and different reference signals are located in different transmission units; and
sending (302), by the transmit-end device, the plurality of reference signals to a receive-end device by using the target time-frequency resource in the plurality of transmission units;
wherein the plurality of transmission units comprises at least two contiguous transmission units and the plurality of reference signals are centrally mapped to the at least two contiguous transmission units;
wherein the method further comprises:
determining, by the transmit-end device, configuration indication information, wherein the configuration indication information comprises a quantity of transmission units occupied by the plurality of reference signals, a quantity of symbols in the first part, and location information of a symbol on which each of the plurality of reference signals is located, wherein the location information comprises at least one of a symbol identifier and a location offset value, and the location offset value of the symbol on which each of the pluarliy of reference signals is located is a location offset value between the symbol on which the reference signal is located and a last symbol of a transmission unit in which the reference signal is located; and
sending, by the transmit-end device, the configuration indication information to the receive-end device.

2. The method according to claim 1, wherein in each of the plurality of transmission units, the target time-frequency resource is located on any symbol in the first part, or the target time-frequency resource is located on any plurality of contiguous symbols in the first part.

3. The method according to any one of claims 1 to 2, wherein each of the at least one symbol in the first part of each of the plurality of transmission units carries at least one type of reference signal, wherein a type of reference signal includes a cell-specific reference signal, CRS, a channel state information-reference signal, CSI-RS, and a sounding reference signal, SRS.

4. The method according to any one of claims 1 to 3, wherein quantities of symbols on which target time-frequency resources in different transmission units are located are equal or not equal.

5. The method according to any one of claims 1 to 4, wherein a same reference signal is located in a same transmission unit and the plurality of transmission units comprises a transmission unit carrying at least two different reference signals.

6. The method according to claim 5, wherein different reference signals located in a same transmission unit are distributed on a target time-frequency resource of the same transmission unit by using at least one multiplexing mode of time division multiplexing, frequency division multiplexing, and code division multiplexing.

7. The method according to any one of claims 1 to 6, wherein the sending, by the transmit-end device, the configuration indication information to the receive-end device comprises:
sending, by the transmit-end device, the configuration indication information to the receive-end device by using dynamic signaling; or sending, by the transmit-end device, the configuration indication information to the receive-end device by using semi-static signaling.

8. The method according to any one of claims 1 to 7, wherein each of the plurality of transmission units further comprises a second part, and in each of the plurality of transmission units, a symbol on which the second part is located is different from a symbol on which the first part is located.

9. The method according to any one of claims 1 to 8, wherein the target time-frequency resource comprises a plurality of time-frequency units, and in the target time-frequency resource, a quantity of time-frequency units carrying a same reference signal is associated with a quantity of reference signals associated with the target time-frequency resource.

10. A transmit-end device (400), wherein the transmit-end device comprises:
a first determining module (410), configured to determine a target time-frequency resource occupied by a plurality of reference signals in a plurality of transmission units comprising a plurality of symbols and subcarriers, wherein each of the plurality of reference signals corresponds to at least one antenna port, wherein each of the plurality of transmission units comprises a first part, in each transmission unit, the target time-frequency resource is located on at least one symbol of the plurality of symbols in the first part, and different reference signals are located in different transmission units; and
a first sending module (420), configured to send the plurality of reference signals to a receive-end device by using the target time-frequency resource in the plurality of transmission units;
wherein the plurality of transmission units comprises at least two contiguous transmission units and the plurality of reference signals are centrally mapped to the at least two contiguous transmission units;
wherein the transmit-end device (400) further includes:
a second determining module, configured to determine configuration indication information, wherein the configuration indication information comprises a quantity of transmission units occupied by the plurality of reference signals, a quantity of symbols occupied by the first part, and location information of a symbol on which each of the plurality of reference signals is located, wherein the location information comprises at least one of a symbol identifier and a location offset value, and the location offset value of the symbol on which each reference signal is located is a location offset value between the symbol on which the reference signal is located and a last symbol of a transmission unit in which the reference signal is located; and
a second sending module, configured to send the configuration indication information to the receive-end device.

## Patentansprüche

1. Bezugssignalübertragungsverfahren, wobei das Verfahren Folgendes umfasst:
Bestimmen (301), durch eine übertragungsseitige Vorrichtung, einer Ziel-Zeit-Frequenz-Ressource, die durch mehrere Bezugssignale in mehreren Übertragungseinheiten, die mehrere Symbole und Unterträger umfassen, besetzt ist, wobei jedes der mehreren Bezugssignale wenigstens einem Antennenanschluss entspricht, wobei jede der mehreren Übertragungseinheiten einen ersten Teil umfasst, in jeder Übertragungseinheit die Ziel-Zeit-Frequenz-Ressource auf wenigstens einem Symbol der mehreren Symbole in dem ersten Teil gelegen ist und unterschiedliche Bezugssignale in unterschiedlichen Übertragungseinheiten gelegen sind; und
Senden (302), durch die übertragungsseitige Vorrichtung, der mehreren Bezugssignale an eine empfangsseitige Vorrichtung durch Verwenden der Ziel-Zeit-Frequenz-Ressource in den mehreren Übertragungseinheiten;
wobei die mehreren Übertragungseinheiten wenigstens zwei zusammenhängende Übertragungseinheiten umfassen und die mehreren Bezugssignale den wenigstens zwei zusammenhängenden Übertragungseinheiten zentral zugeordnet sind;
wobei das Verfahren ferner Folgendes umfasst:
Bestimmen, durch die übertragungsseitige Vorrichtung, von Konfigurationsanzeigeinformationen, wobei die Konfigurationsanzeigeinformationen eine Anzahl von Übertragungseinheiten, die durch die mehreren Bezugssignale besetzt sind, eine Anzahl von Symbolen in dem ersten Teil und Lageinformationen eines Symbols, auf dem jedes der mehreren Bezugssignale gelegen ist, umfassen, wobei die Lageinformationen einen Symbolbezeichner und/oder einen Lageversatzwert umfassen und der Lageversatzwert des Symbols, auf dem jedes der mehreren Bezugssignale gelegen ist, ein Lageversatzwert zwischen dem Symbol, auf dem das Bezugssignal gelegen ist, und einem letzten Symbol einer Übertragungseinheit, in der das Bezugssignal gelegen ist, ist; und
Senden, durch die übertragungsseitige Vorrichtung, der Konfigurationsanzeigeinformationen an die empfangsseitige Vorrichtung.

2. Verfahren nach Anspruch 1, wobei in jeder der mehreren Übertragungseinheiten die Ziel-Zeit-Frequenz-Ressource auf einem beliebigen Symbol in dem ersten Teil gelegen ist oder die Ziel-Zeit-Frequenz-Ressource auf beliebigen mehreren zusammenhängenden Symbolen in dem ersten Teil gelegen ist.

3. Verfahren nach einem der Ansprüche 1 bis 2, wobei jedes des wenigstens einen Symbols in dem ersten Teil jeder der mehreren Übertragungseinheiten wenigstens eine Art von Bezugssignal trägt, wobei eine Art von Bezugssignal ein zellenspezifisches Bezugssignal (*cell-specific reference signal* - CRS), ein Kanalzustandsinformationsbezugssignal (*channel state information-reference signal* - CSI-RS) und ein Sondierungsbezugssignal (*sounding reference signal* - SRS) beinhaltet.

4. Verfahren nach einem der Ansprüche 1 bis 3, wobei Anzahlen von Symbolen, auf denen Ziel-Zeit-Frequenz-Ressourcen in unterschiedlichen Übertragungseinheiten gelegen sind, gleich oder ungleich sind.

5. Verfahren nach einem der Ansprüche 1 bis 4, wobei ein selbes Bezugssignal in einer selben Übertragungseinheit gelegen ist und die mehreren Übertragungseinheiten eine Übertragungseinheit, die wenigstens zwei unterschiedliche Bezugssignale trägt, umfassen.

6. Verfahren nach Anspruch 5, wobei
unterschiedliche Bezugssignale, die in einer selben Übertragungseinheit gelegen sind, auf einer Ziel-Zeit-Frequenz-Ressource derselben Übertragungseinheit durch Verwenden wenigstens eines Multiplexmodus von Zeitmultiplexverfahren, Frequenzmultiplexverfahren und Codemultiplexverfahren verteilt werden.

7. Verfahren nach einem der Ansprüche 1 bis 6, wobei das Senden, durch die übertragungsseitige Vorrichtung, der Konfigurationsanzeigeinformationen an die empfangsseitige Vorrichtung Folgendes umfasst:
Senden, durch die übertragungsseitige Vorrichtung, der Konfigurationsanzeigeinformationen an die empfangsseitige Vorrichtung durch Verwenden von dynamischer Signalisierung; oder Senden, durch die übertragungsseitige Vorrichtung, der Konfigurationsanzeigeinformationen an die empfangsseitige Vorrichtung durch Verwenden von semistatischer Signalisierung.

8. Verfahren nach einem der Ansprüche 1 bis 7, wobei jede der mehreren Übertragungseinheiten ferner einen zweiten Teil umfasst und sich in jeder der mehreren Übertragungseinheiten ein Symbol, auf dem der zweite Teil gelegen ist, von einem Symbol, auf dem der erste Teil gelegen ist, unterscheidet.

9. Verfahren nach einem der Ansprüche 1 bis 8, wobei die Ziel-Zeit-Frequenz-Ressource mehrere Zeit-Frequenz-Einheiten umfasst und in der Ziel-Zeit-Frequenz-Ressource eine Anzahl von Zeit-Frequenz-Einheiten, die ein selbes Bezugssignal tragen, mit einer Anzahl von Bezugssignalen verknüpft ist, die mit der Ziel-Zeit-Frequenz-Ressource verknüpft ist.

10. Übertragungsseitige Vorrichtung (400), wobei die übertragungsseitige Vorrichtung Folgendes umfasst:
ein erstes Bestimmungsmodul (410), das konfiguriert ist, um eine Ziel-Zeit-Frequenz-Ressource zu bestimmen, die durch mehrere Bezugssignale in mehreren Übertragungseinheiten, die mehrere Symbole und Unterträger umfassen, besetzt ist, wobei jedes der mehreren Bezugssignale wenigstens einem Antennenanschluss entspricht, wobei jede der mehreren Übertragungseinheiten einen ersten Teil umfasst, die Ziel-Zeit-Frequenz-Ressource in jeder Übertragungseinheit auf wenigstens einem Symbol der mehreren Symbole in dem ersten Teil gelegen ist und unterschiedliche Bezugssignale in unterschiedlichen Übertragungseinheiten gelegen sind; und
ein erstes Sendemodul (420), das konfiguriert ist, um die mehreren Bezugssignale an eine empfangsseitige Vorrichtung durch Verwenden der Ziel-Zeit-Frequenz-Ressource in den mehreren Übertragungseinheiten zu senden;
wobei die mehreren Übertragungseinheiten wenigstens zwei zusammenhängende Übertragungseinheiten umfassen und die mehreren Bezugssignale den wenigstens zwei zusammenhängenden Übertragungseinheiten zentral zugeordnet sind;
wobei die übertragungsseitige Vorrichtung (400) ferner Folgendes beinhaltet:
ein zweites Bestimmungsmodul, das konfiguriert ist, um Konfigurationsanzeigeinformationen zu bestimmen, wobei die Konfigurationsanzeigeinformationen eine Anzahl von Übertragungseinheiten, die durch die mehreren Bezugssignale besetzt sind, eine Anzahl von Symbolen, die durch den ersten Teil besetzt sind, und Lageinformationen eines Symbols, auf dem jedes der mehreren Bezugssignale gelegen ist, umfassen, wobei die Lageinformationen einen Symbolbezeichner und/oder einen Lageversatzwert umfassen und der Lageversatzwert des Symbols, auf dem jedes Bezugssignal gelegen ist, ein Lageversatzwert zwischen dem Symbol, auf dem das Bezugssignal gelegen ist, und einem letzten Symbol einer Übertragungseinheit, in der das Bezugssignal gelegen ist, ist; und
ein zweites Sendemodul, das konfiguriert ist, um die Konfigurationsanzeigeinformationen an die empfangsseitige Vorrichtung zu senden.

## Revendications

1. Procédé d'émission de signaux de référence, le procédé comprenant :
la détermination (301), par un dispositif d'extrémité d'émission, d'une ressource temps-fréquence cible occupée par une pluralité de signaux de référence dans une pluralité d'unités d'émission comprenant une pluralité de symboles et de sous-porteuses, chacun de la pluralité de signaux de référence correspondant à au moins un port d'antenne, chacune de la pluralité d'unités d'émission comprenant une première partie, dans chaque unité d'émission, la ressource temps-fréquence cible étant située sur au moins un symbole de la pluralité de symboles dans la première partie, et différents signaux de référence étant situés dans différentes unités d'émission ; et
l'envoi (302), par le dispositif d'extrémité d'émission, de la pluralité de signaux de référence à un dispositif d'extrémité de réception à l'aide de la ressource temps-fréquence cible dans la pluralité d'unités d'émission ;
la pluralité d'unités d'émission comprenant au moins deux unités d'émission contiguës et la pluralité de signaux de référence étant mappés de manière centrale sur les au moins deux unités d'émission contiguës ;
le procédé comprenant en outre :
la détermination, par le dispositif d'extrémité d'émission, d'informations d'indication de configuration, les informations d'indication de configuration comprenant une quantité d'unités d'émission occupées par la pluralité de signaux de référence, une quantité de symboles dans la première partie et des informations d'emplacement d'un symbole sur lequel chacun de la pluralité de signaux de référence étant localisé, les informations d'emplacement comprenant un identifiant de symbole et/ou une valeur de décalage d'emplacement, et la valeur de décalage d'emplacement du symbole sur lequel chacun de la pluralité de signaux de référence est situé étant une valeur de décalage d'emplacement entre le symbole sur lequel se trouve le signal de référence et un dernier symbole d'une unité d'émission dans laquelle se trouve le signal de référence ; et
l'envoi, par le dispositif d'extrémité d'émission, des informations d'indication de configuration au dispositif d'extrémité de réception.

2. Procédé selon la revendication 1, dans chacune de la pluralité d'unités d'émission, la ressource temps-fréquence cible étant située sur un symbole quelconque dans la première partie, ou la ressource temps-fréquence cible étant située sur une pluralité de symboles contigus dans la première partie.

3. Procédé selon l'une quelconque des revendications 1 à 2, chacun de l'au moins un symbole dans la première partie de chacune de la pluralité d'unités d'émission transportant au moins un type de signal de référence, un type de signal de référence comportant un signal de référence spécifique à la cellule, CRS, un signal de référence d'informations d'état de canal, CSI-RS, et un signal de référence de sondage, SRS.

4. Procédé selon l'une quelconque des revendications 1 à 3, les quantités de symboles sur lesquelles se trouvent des ressources temps-fréquence cibles dans différentes unités d'émission étant égales ou non.

5. Procédé selon l'une quelconque des revendications 1 à 4, un même signal de référence étant situé dans une même unité d'émission et la pluralité d'unités d'émission comprenant une unité d'émission portant au moins deux signaux de référence différents.

6. Procédé selon la revendication 5, différents signaux de référence situés dans une même unité d'émission étant distribués sur une ressource temps-fréquence cible de la même unité d'émission en utilisant au moins un mode de multiplexage de multiplexage par répartition dans le temps, multiplexage par répartition de fréquence, et multiplexage par répartition de code.

7. Procédé selon l'une quelconque des revendications 1 à 6, l'envoi, par le dispositif réseau (130), des secondes informations d'indication au dispositif terminal comprenant :
l'envoi, par le dispositif d'extrémité d'émission, des informations d'indication de configuration au dispositif d'extrémité de réception en utilisant une signalisation dynamique ; ou
l'envoi, par le dispositif d'extrémité d'émission, des informations d'indication de configuration au dispositif d'extrémité de réception en utilisant une signalisation semistatique.

8. Procédé selon l'une quelconque des revendications 1 à 7, chacune de la pluralité d'unités d'émission comprenant en outre une seconde partie, et dans chacune de la pluralité d'unités d'émission, un symbole sur lequel se trouve la seconde partie étant différent d'un symbole sur lequel se trouve la première partie.

9. Procédé selon l'une quelconque des revendications 1 à 8, la ressource temps-fréquence cible comprenant une pluralité d'unités temps-fréquence, et dans la ressource temps-fréquence cible, une quantité d'unités temps-fréquence portant un même signal de référence étant associée à une quantité de signaux de référence associés à la ressource temps-fréquence cible.

10. Dispositif d'extrémité d'émission (400), le dispositif d'extrémité d'émission comprenant :
un premier module de détermination (410), configuré pour déterminer une ressource temps-fréquence cible occupée par une pluralité de signaux de référence dans une pluralité d'unités d'émission comprenant une pluralité de symboles et de sous-porteuses, chacun de la pluralité de signaux de référence correspondant à au moins un port d'antenne, chacune de la pluralité d'unités d'émission comprenant une première partie, dans chaque unité d'émission, la ressource temps-fréquence cible étant située sur au moins un symbole de la pluralité de symboles dans la première partie, et différents signaux de référence étant situés dans différentes unités d'émission ; et
un premier module d'envoi (420), configuré pour envoyer la pluralité de signaux de référence à un dispositif d'extrémité de réception en utilisant la ressource temps-fréquence cible dans la pluralité d'unités d'émission ;
la pluralité d'unités d'émission comprenant au moins deux unités d'émission contiguës et la pluralité de signaux de référence étant mappés de manière centrale sur les au moins deux unités d'émission contiguës ;
le dispositif d'extrémité d'émission (400) comprenant en outre :
un second module de détermination, configuré pour déterminer des informations d'indication de configuration, les informations d'indication de configuration comprenant une quantité d'unités d'émission occupées par la pluralité de signaux de référence, une quantité de symboles occupés par la première partie et des informations d'emplacement d'un symbole sur lequel chacun de la pluralité de signaux de référence est située, les informations d'emplacement comprenant un identifiant de symbole et/ou une valeur de décalage d'emplacement, et la valeur de décalage d'emplacement du symbole sur lequel chaque signal de référence est situé étant une valeur de décalage d'emplacement entre le symbole sur lequel se trouve le signal de référence et un dernier symbole d'une unité d'émission dans laquelle se trouve le signal de référence ; et
un second module d'envoi, configuré pour envoyer les informations d'indication de configuration au dispositif d'extrémité de réception.
